# FASCICULE DE BREVET EUROPEEN

(11) **EP 2 414 434 B1**
(45) Date de publication et mention de la délivrance du brevet: **27.07.2016**
(21) Numéro de dépôt: 10717672.9
(22) Date de dépôt: 30.03.2010
(51) Int. Cl.: C08G 81/00, C04B 24/24, B01F 17/00

(54) **PROCÉDÉ DE PRÉPARATION DE SUPERPLASTIFIANTS**
VERFAHREN ZUR HERSTELLUNG EINES VERFLÜSSIGUNGSMITTELS
METHOD FOR PREPARING A SUPERPLASTICIZER

(30) Priorité: 01.04.2009 FR 0952098
(43) Date de publication de la demande: 08.02.2012
(73) Titulaire: Chryso, 92440 Issy-Les-Moulineaux (FR)
(72) Inventeur: DESSEROIR, Alexandre, F-28700 Sainville (FR); MAITRASSE, Philippe, F-45170 Chilleurs Aux Bois (FR)
(74) Mandataire: Jacobson, Claude
(86) Numéro de dépôt international: PCT/FR2010/050578
(87) Numéro de publication internationale: WO 2010/112750

(56) Documents cités:
- EP-A- 0 446 621
- FR-A- 2 120 542
- FR-A- 2 776 285
- US-A- 5 614 017
- DATABASE WPI Week 198825 Thomson Scientific, London, GB; AN 1988-173071 XP002543840 & JP 63 112608 A (DENKI KAGAKU KOGYO KK) 17 mai 1988 (1988-05-17)
- DATABASE WPI Week 200062 Thomson Scientific, London, GB; AN 2000-641019 XP002543841 & JP 2000 212129 A (NIPPON SHOKUBAI CO LTD) 2 août 2000 (2000-08-02)
- DATABASE CHEMABS CHEMICAL ABSTRACTS SERVICE, COLUMBUS, OHIO, US; 2005, YOU, CHANG-JIANG E.A.: "Catalytic esterification and kinetic study of polyethylene oxide and acrylic acid" XP002543839

## Description

La présente invention concerne un procédé de préparation de (co)polymères polycarboxylates polyalkoxylés utiles notamment à titre de superplastifiants.

La découverte des propriétés dispersantes exceptionnelles des (co)polymères peignes polycarboxylates polyalkoxylés (PCP), aussi appelés superplastifiants, a permis à la technologie du béton de progresser rapidement ; il est devenu possible de fabriquer des bétons fluides beaucoup plus aisés à mettre en place.

Ces superplastifiants sont des (co)polymères présentant une structure en peigne, dont la chaîne principale polymérique comportant des groupes carboxyliques qui portent des chaînes latérales composées de séquences de type polyéther.

La préparation de ces (co)polymères par estérification d'un acide polycarboxylique avec un polyéther en présence d'un catalyseur alcalin est décrite dans le brevet de la société Chryso FR2776285.

Ce procédé n'est toutefois pas complètement satisfaisant en termes de cinétique de réaction et de conversion du polyéther lorsque le polyalkylèneglycol a une masse molaire élevée et/ou comporte des unités oxypropylène. Par ailleurs, il peut donner des résultats décevants pour certains acides polycarboxyliques, par exemple ceux dérivés d'acide acrylique et d'anhydride maléique.

Il est par ailleurs connu d'utiliser des acides forts tels que l'acide p-toluènesulfonique ou méthanesulfonique comme catalyseur de l'estérification de l'acide polycarboxylique avec un polyéther. Cependant, on observe lors de la réaction avec des polyéthers de masse molaire élevée à une température de 175°C des coupures de chaînes, qui engendrent une montée de la viscosité du milieu réactionnel par des réactions de type réticulation, gélification et risque de prise en masse du milieu réactionnel.

Le document US 5,614,017 décrit une catalyse de cette réaction avec des acides forts, éventuellement formés in situ à partir d'un sel comme le triflate de zinc. La réaction est conduite dans des conditions favorables à une coupure partielle du polyéther. Il a été constaté que l'utilisation de triflate de zinc limite le taux de conversion et affecte la longueur des chaînes polyéther.

Le but de la présente invention est de proposer un procédé de préparation de (co)polymères polycarboxyliques polyalkoxylés intéressant pour améliorer la viscosité de compositions hydrauliques qui permette un bon taux de conversion même lorsque le polyéther présente une forte teneur en groupes oxypropylène et/ou une masse molaire élevée, ou lorsque l'acide polycarboxylique comporte des unités différentes de l'acide (méth)acrylique.

Le terme « acide (métha)acrylique » englobe l'acide acrylique et l'acide méthacrylique.

Ces buts sont atteints par un procédé de préparation de polycarboxylates polyalkoxylés dans lequel l'on fait réagir, en présence d'eau et d'un catalyseur, à une température comprise entre 120 et 250 °C :
- au moins un acide polycarboxylique obtenu par polymérisation d'au moins un acide carboxylique insaturé; et
- au moins un polyéther portant un groupe hydroxyle libre capable de réagir avec une fonction carboxylique du dit acide polycarboxylique,
le dit procédé étant caractérisé en ce que le catalyseur est un sel alcalin ou alcalin-terreux d'un acide protique fort.

On entend par le terme « acide protique fort » désigner des acides capables de libérer un ou plusieurs protons et présentant un pKa inférieur à 0.

En effet, il a été mis en évidence que l'utilisation d'un acide protique fort neutralisé permettait d'améliorer le taux de conversion des polyéthers, sans coupures de chaînes, tout en ayant une activité catalytique suffisante pour permettre la réaction d'estérification.

Il a été également démontré que l'utilisation de certains sels d'acides forts permet de diminuer la teneur des (co)polymères en composés à masse molaire élevée.

Enfin, il a été observé que les catalyseurs proposés permettent d'assurer, sans doute par une meilleure compatibilité entre l'acide polycarboxylique et le polyéther, le plus souvent une réaction en milieu homogène, ce qui n'est pas toujours le cas pour d'autres catalyseurs comme le LiOH.

De préférence, le catalyseur est un sel d'un acide protique fort comportant un groupe hydrocarboné. De tels acides peuvent être choisis dans le groupe constitué par les acides alkyl-, alkylaryl-, aryl-, ou arylalkylsulfoniques, les acides alkyl-, alkylaryl-, aryl-, ou arylalkylphosphoriques, les acides alkyl-, alkylaryl-, aryl-, ou arylalkylphosphoniques et les alkyl-, alkylaryl-, aryl-, ou arylalkylsulfates acides, éventuellement substitués par halogène ou par des groupements oxyalkylène, notamment alkyl-polyoxyalkylène, alkylaryl polyoxyalkylène, aryl polyoxyalkylène, l'alkylène étant de préférence éthylène et le nombre de motifs oxyalkylène pouvant varier de 0 à 100.

Particulièrement préférés sont les catalyseurs choisis parmi les sels d'acides alkylsulfoniques, arylsulfoniques, alkylarylsulfoniques ou arylalkylsulfoniques, tels que les sels de sodium, potassium, lithium, calcium et magnésium d'acide p-toluènesulfonique.

Avantageusement, on ajoute le catalyseur en une quantité de 0,04% à 10% molaire, rapporté au nombre de fonctions carboxyliques de l'acide polycarboxylique.

Dans le procédé selon l'invention, l'acide polycarboxylique est de préférence choisi parmi les homopolymères et copolymères d'acide (méth)acrylique et les copolymères d'acide (méth)acrylique et d'acide maléique ou d'anhydride maléique.

Le polyéther peut être en particulier un alkyléther de polyalkylène glycol de formule :

HO-Q-R³

dans laquelle :
R³ est H ou un groupe alkyle, aryle, alkylaryle, arylalkyle de 1 à 20 atomes de carbone, et Q est de formule (II): 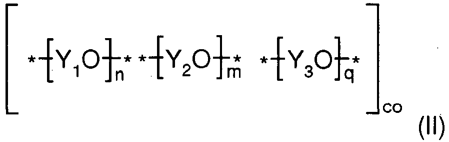 dans laquelle :
   - Y₁ représente un groupe alkylène de 2 atomes de carbone,
   - Y₂ représente un groupe alkylène de 3 atomes de carbone ;
   - Y₃ représente un groupe alkylène de 4 atomes de carbone ;
   - n est un nombre entier variant de 3 à 500 ;
   - m est un nombre entier variant de 0 à 150 ; et
   - q est un nombre entier variant de 0 à 150,

La mention « co » indexant les crochets dans la formule (II) signifie que les groupes Y₁O à Y₃O peuvent être distribués dans le groupe Q de manière quelconque, en blocs, en séquence ou de manière statistique. De préférence, ils sont distribués de manière statistique.

Lorsque plusieurs polyéthers sont mis en oeuvre en mélange, il n'est pas nécessaire que chacun comporte des groupes Y₂O ou Y₃O. Toutefois, le rapport moyen n/(n+m+q) varie de préférence entre 0,2 et 1, de préférence entre 0,5 et 0,99.

Selon un mode de réalisation préféré, on ajoute 5 à 80 % molaire, et avantageusement 20 à 70% molaire de polyéther, rapporté au nombre de fonctions carboxyliques disponibles de l'acide polycarboxylique.

Le (co)polymère peut être obtenu par estérification partielle catalysée par l'ajout d'un sel tel que défini ci-dessus. Une telle estérification ne conduit pas à une rupture significative des chaînes de polyéther, si bien que le poids moléculaire moyen en poids du polyéther avant estérification est sensiblement égal à celui des chaînes polyéther du dispersant obtenu par le procédé selon l'invention.

De préférence, le sel utilisé à titre de catalyseur de l'estérification partielle est choisi parmi les sels d'acides organiques protiques forts tels les acides alkyl-, alkylaryl-, aryl-, ou arylalkylsulfoniques, les acides alkyl-, alkylaryl-, aryl-, ou arylalkylphosphoriques, les acides alkyl-, alkylaryl-, aryl-, ou arylalkylphosphoniques et les alkyl-, alkylaryl-, aryl-, ou arylalkylsulfates acides. Ces acides peuvent être éventuellement substitués par halogène ou par des groupements alkoxyle, notamment alkyl-polyalkylèneoxyde, alkylaryl polyalkylèneoxyde, aryl polyalkylène oxyde, l'alkylène étant de préférence éthylène et le nombre de motifs oxyalkylène pouvant varier de 0 à 100. A titre d'exemple, la société COGNIS propose un sel de sodium de sulfates d'alcool comportant 12 à 14 atomes de carbone éthoxylés avec 4 motifs d'oxyde d'éthylène.

Tout particulièrement visés sont les sels d'acides alkylsulfoniques, alkylarylsulfoniques ou arylalkylsulfoniques comme les sels de l'acide p-toluènesulfonique.

Le catalyseur est un sel alcalin ou alcalin-terreux des acides définis ci-dessus, et inclut notamment les sels de Na, K, Li, Ca et Mg.

Il est préférable d'utiliser des cations peu susceptibles d'être complexés par les groupements carboxyliques de l'acide polycarboxylique, ce qui pourrait avoir pour effet de libérer le catalyseur sous sa forme acide, entraînant ainsi un risque de coupure des chaînes du polyéther. Les sels particulièrement préférés sont ceux permettant une réaction en milieu homogène. Parmi ces sels, on peut mentionner notamment le p-toluènesulfonate de sodium.

Généralement, il est préférable d'ajouter au milieu réactionnel au moins 0,04% molaire de catalyseur rapporté au nombre de fonctions carboxyliques de l'acide polycarboxylique. De préférence encore, la quantité de catalyseur sera au plus égale à 10% molaire rapporté au nombre de fonctions carboxyliques de l'acide polycarboxylique.

De préférence, l'acide polycarboxylique utilisé pour préparer le (co)polymère est obtenu par polymérisation d'un mélange de monomères contenant comme composant essentiel l'acide (méth)acrylique. On entend par « composant essentiel » une proportion d'au moins 50%, de préférence au moins 80%, et tout particulièrement au moins 90% en masse du composant par rapport à la totalité de monomères. Selon un mode de réalisation, l'acide polycarboxylique est obtenu par polymérisation d'acide (méth)acrylique, à l'exclusion d'autres monomères. Eventuellement, l'acide polycarboxylique peut aussi être dérivé d'autres comonomères comprenant une fonctionnalité différente d'un acide carboxylique à une ou plusieurs insaturations éthyléniques pouvant être copolymérisés avec l'acide (méth)acrylique, tels que l'acide maléique et l'anhydride d'acide maléique.

Parmi ces monomères, on peut mentionner notamment les (méth)acrylates d'alkyle (R = C1 à C22), les dérivés aromatiques et les dérivés vinyl méthallyle. Tout particulièrement intéressants sont les monomères portant des fonctions acides forts tels que les acides sulfoniques, les sulfates acides, les acides phosphoriques et les acides phosphoniques car ces monomères peuvent jouer le rôle de catalyseur lorsqu'ils sont partiellement ou totalement neutralisés.

De préférence, l'acide polycarboxylique est un homopolymère et/ou un copolymères d'acide (méth)acrylique ou un copolymère d'acide (méth)acrylique et d'acide maléique ou d'anhydride maléique.

La masse molaire moyenne en poids Mw de l'acide polycarboxylique mis en oeuvre dans le procédé selon l'invention est de préférence compris entre 500 et 60000.

L'acide polycarboxylique à estérifier est, de préférence, une solution aqueuse miscible au(x) polyéther(s) ou un solide soluble dans le(s) polyéther(s).

Le polyéther contenant un groupe hydroxyle libre utilisé pour préparer le (co)polymère est avantageusement un alkyléther de polyalkylène glycol, de préférence un mélange d'alkyléthers de polyalkylène glycol de formule :

HO-Q-R³

dans laquelle :
R³ est H ou un groupe alkyle, aryle, alkylaryle, arylalkyle de 1 à 20 atomes de carbone, de préférence méthyle, et Q est de formule (II): 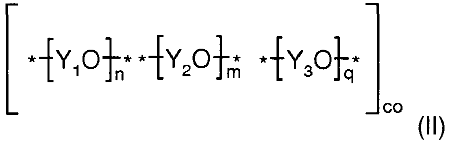 dans laquelle :
   - Y₁ représente un groupe alkylène de 2 atomes de carbone,
   - Y₂ représente un groupe alkylène de 3 atomes de carbone ;
   - Y₃ représente un groupe alkylène de 4 atomes de carbone ;
   - n est un nombre entier variant de 3 à 500 ;
   - m est un nombre entier variant de 0 à 150 ; et
   - q est un nombre entier variant de 0 à 150.

La mention « co » indexant les crochets dans la formule (II) signifie que les groupes Y₁O à Y₃O peuvent être distribués dans le groupe Q de manière quelconque, en blocs, en séquence ou de manière statistique. De préférence, ils sont distribués de manière statistique.

Lorsque plusieurs polyéthers sont mis en oeuvre en mélange, il n'est pas nécessaire que chacun comporte des groupes Y₂O ou Y₃O. Toutefois, le rapport moyen n/(n+m+q) varie de préférence entre 0,2 et 1, de préférence entre 0,3 à 0,99.

Ainsi, sous réserve de respecter les conditions précitées, un mélange d'alkyléthers de polyalkylène glycol peut renfermer un ou plusieurs alkyléthers de polyalkylène glycol de formule HO-Q-R³ dans laquelle m et q sont 0.

Préférés sont les polyéthers de formule HOQ-R³, dans laquelle Q est de formule (II) où :
- R³ représente un groupe méthyle ou éthyle ;
- n est un nombre entier variant de 3 à 150, de préférence de 5 à 50 ;
- m est un nombre entier variant de 1 à 50, de préférence de 1 à 25 ;
- q est 0 ; et
- le rapport moyen n/(n+m+q) varie de 0,5 à 0,99.

De préférence, le polyéther est constitué :
- d'un ou de plusieurs alkyléthers de polyéthylène glycol contenant des unités oxypropylène, se distinguant par leur poids moléculaire moyen en poids ;ou
- d'un ou plusieurs alkyléthers de polypropylène glycol renfermant des unités oxyéthylène, se distinguant par leur poids moléculaire moyen en poids, ou
- d'un mélange des alkyléthers ainsi définis.

La masse molaire moyenne du polyéther peut varier de 150 à 30 000, de préférence de 300 à 10000, en particulier de 300 à 5000.

Des résultats particulièrement satisfaisants ont été atteints avec les dispersants obtenus à partir d'au moins un acide polycarboxylique et d'au moins un polyéther contenant un groupe hydroxyle libre choisi parmi :
- un méthyléther de polyalkylène glycol contenant 3 à 150 unités oxyalkylène, de préférence oxyéthylène et éventuellement oxypropylène, le rapport molaire moyen des unités oxyéthylènes sur les unités oxyalkylène (YO) étant d'environ 0,2 à 1.
- ou un mélange de ces méthyléthers de polyalkylène glycol qui se différencient essentiellement par leur nombre d'unités oxyalkylène.

En plus du (ou des) alkyléther(s) de polyalkylène glycol, on peut prévoir dans le milieu réactionnel un ou plusieurs polyéthers porteurs d'au moins deux groupes hydroxyles libres, en quantité limitée.

Egalement, on peut prévoir, en quantité limitée, un polyalkylène glycol ou un mélange de polyalkylène glycols comprenant une chaîne alkyl, aryle ou alkyl aryle, ramifiée ou non, de 8 à 22 atomes de carbone. La quantité de ces polyalkylène glycols est toutefois de préférence inférieure à 10%, de préférence inférieure à 2% molaire, rapporté aux nombres de fonctions carboxyliques de l'acide polycarboxylique.

La quantité de polyéther mis en oeuvre dans le procédé décrit sera fonction du degré d'estérification souhaité.

Avantageusement, la réaction d'estérification partielle est conduite afin d'estérifier 5 à 80%, de préférence 20 à 70% des fonctions carboxyliques par un polyéther ou un mélange de polyéthers.

La réaction d'estérification partielle est de préférence conduite sous pression réduite afin d'éliminer progressivement l'eau formée au cours de la réaction. La pression réduite est généralement comprise entre environ 5 et 150 mbars.

La réaction d'estérification est arrêtée dès que le pourcentage visé de fonctions carboxyliques estérifiées de l'acide polycarboxylique est atteint.

La masse molaire moyenne en poids, « Mw », du (co)polymère obtenu, mesuré par chromatographie par perméation de gel avec un étalonnage polyéthylène glycol, varie généralement entre environ 1000 et environ 1 000 000, de préférence entre environ 10 000 et environ 80 000.

Le (co)polymère ainsi préparé présente des propriétés de dispersant intéressantes. Il peut être utilisé avec des compositions à base de ciment hydraulique comme les ciments Portland CEM I ; les ciments alumineux, divers ciments composés CEM II ou CEM III constitués par mélange, avant ou après broyage de clinker de Portland et de laitier, de pouzzolanes naturelles et/ou de cendres volantes ; ou des matériaux hydrauliques autres que le ciment, tels que les sulfates de calcium hydrauliques, les liants contenant des CSA (sulfo-aluminates de calcium), les verres hydrauliques, des liants magnésiens et phosphatiques.

Dans les figures et exemples suivants, l'invention sera décrite plus en détail.

### FIGURES

La figure 1 montre la cinétique de réaction et le polyéther résiduel de copolymères préparés avec un catalyseur basique (exemple A à F) ;
La figure 2 montre les chromatographies par perméation de gel de copolymères préparés avec un catalyseur basique (exemples A à F) ;
La figure 3 compare la cinétique de réaction et le polyéther résiduel de copolymères préparés avec un catalyseur basique et un sel alcalin d'acide protique fort (exemple F et exemple 1);
La figure 4 compare les chromatographies par perméation de gel de copolymères avec un catalyseur basique et un sel alcalin d'acide protique fort (exemple F et exemple 1) ;
La figure 5 compare les chromatographies par perméation de gel de copolymères préparés avec un catalyseur basique et un sel alcalin d'acide protique fort (exemple B et exemple 3) ;
La figure 6 montre les chromatographies par perméation de gel de copolymères préparés selon les exemples 6, 7 et 8 ;
La figure 7 compare la cinétique d'estérification d'acide polyacrylique avec à titre de catalyseur de l'acide p-toluènesulfonique, le p-toluènesulfonate de sodium et le triflate de zinc (exemple 4, exemple G et exemple K) ;
La figure 8 compare la cinétique d'estérification d'acide polyméthacrylique avec à titre de catalyseur le p-toluènesulfonate de sodium et avec l'hydroxyde de sodium (exemple 13 et exemple J) ;
La figure 9 montre l'évolution de la distribution des masses molaires au cours de la synthèse de l'exemple 4 (distributions mesurées sur les échantillons prélevés à 5h10, 7h05 et 12h40 à partir du moment où le milieu réactionnel atteint 170 °C (T₀);
La figure 10 montre l'évolution de la distribution des masses molaires au cours de la synthèse de l'exemple G (distributions mesurées sur les échantillons prélevés à 5h30, 7h10 et 8h00 à partir du moment où le milieu réactionnel atteint 170 °C (T₀) ; et
La figure 11 montre l'évolution de la distribution des masses molaires au cours de la synthèse de l'exemple K (distributions mesurées sur les échantillons prélevés à 1h00, 4h35 et 6h50 à partir du moment où le milieu réactionnel atteint 170 °C (T₀).

### EXEMPLES

### EXEMPLE A (exemple de comparaison)

Dans un quadricol muni d'un agitateur et de moyens de chauffage et relié à une trompe d'eau, on a introduit 25g d'acide polyacrylique (Mw=2000, titre acide mesuré = 330 mg KOH/g, extrait sec 49% en poids) puis 0,34 g (5,5% molaire des fonctions carboxyliques de l'acide polyacrylique) d'hydroxyde de lithium. Dans le milieu ont été ensuite introduit 73,66g (25% molaire des fonctions carboxyliques de l'acide polyacrylique) de polyoxyde d'éthylène méthoxylé (MPEG2000). Le mélange réactionnel a été porté à une température de 80°C et mis progressivement sous vide (pression d'environ 50 mbar). A la fin de la distillation de l'eau, la température du milieu réactionnel a été portée progressivement à 175°C. Le temps de réaction a été mesuré à partir du moment où le milieu réactionnel atteint 170°C. La réaction a été poursuivie pendant une durée de 6 heures.

L'avancement de la réaction d'estérification est suivi par le dosage de MPEG non réagi, par GPC, par comparaison de l'aire du pic avec une courbe d'étalonnage établie préalablement.

A l'issue de la réaction, le milieu réactionnel est ramené à pression atmosphérique et la chauffe est coupée. Une fois la température du milieu réactionnel inférieure à 90°C, le polymère fondu est dilué à 50% en poids dans l'eau.

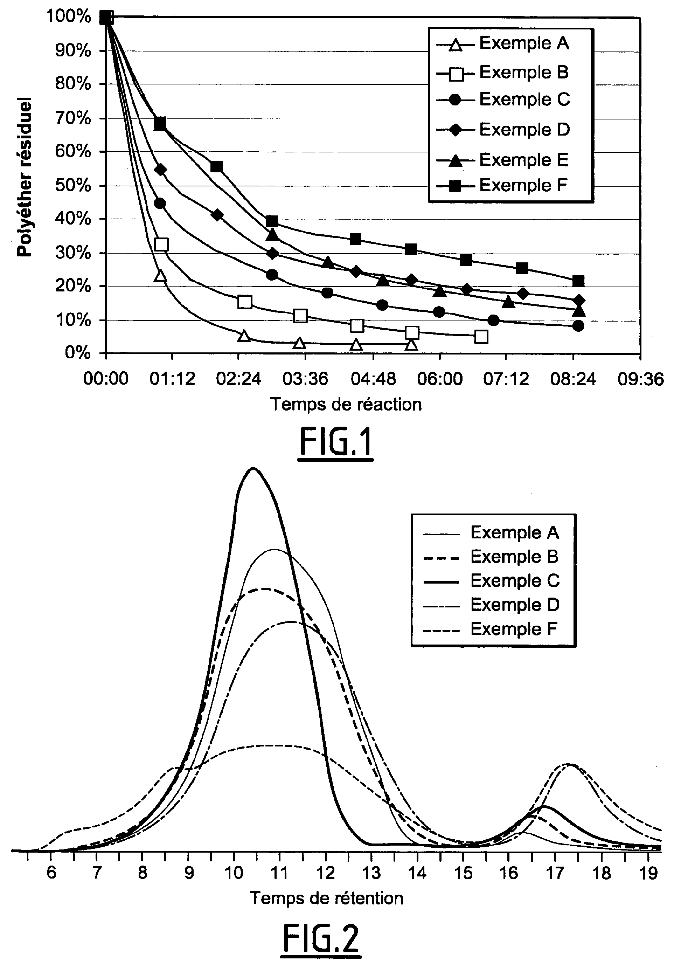

Les cinétiques obtenues par le dosage du polyéther non réagi sont indiquées sur la figure 1 et la teneur en polyéther résiduelle est indiquée dans le tableau 1 ci-dessous. La chromatographie par perméation de gel du composé est illustrée à la figure 2.

### EXEMPLE B à F (exemples de comparaison)

La réaction selon l'exemple A a été répétée en remplaçant le polyoxyde d'éthylène méthoxylé par 73,66g (25% molaire des fonctions carboxyliques de l'acide polyacrylique) de polyoxyde d'éthylène/polyoxyde de propylène de masse molaire Mw 2000 contenant respectivement 10%, 20%, 30%, 40% et 50% molaires d'oxyde de propylène répartis statistiquement le long de la chaîne, laquelle est terminée par un groupement méthoxy.

Les polyéthers alkoxylés mis en oeuvre selon la présente invention sont obtenus par polymérisation vivante de monomères époxydés comportant 2 à 4 atomes de carbone. Les polymères peuvent être des homopolymères ou copolymères comprenant des unités qui se répètent reliées entre elles par des liaisons éther. De façon préférentielle, les époxydes comprennent les unités oxyde de propylène et oxyde d'éthylène. Les polyéthers selon la description précédente ainsi que leur mode de préparation sont bien connus de l'homme de l'art. Une méthode pour leur préparation consiste par exemple en la mise en oeuvre d'une base alcaline ou d'un métal en présence d'un mono-alcool, un glycol ou toute autre substance comportant un hydrogène labile. Ce mélange est ensuite mis au contact d'époxydes pour polymériser par ouverture des cycles oxirannes avec ou sans solvant. En fin de réaction, une hydrolyse est réalisée pour obtenir le composé polyalkoxylé correspondant.

Les cinétiques obtenues sont indiquées sur la figure 1 et la teneur en polyéther résiduelle est indiquée dans le tableau 1 ci-dessous. Les chromatographies par perméation de gel des composés sont indiquées dans la figure 2.

**Tableau 1 : Exemples comparatifs**

| | | **Polyéther** | | **Taux d'ester visé** [% molaire] | **Polyéther résiduel** [% en poids] |
|---|---|---|---|---|---|
| **Exemple** | **Acide polycarboxylique** | **Masse molaire** | **Oxyprop.** [% molaire] | | |
| A | Acrylique | 2000 | 0 | 25 | 4.7 |
| B | Acrylique | 2000 | 10 | 25 | 6.5 |
| C | Acrylique | 2000 | 20 | 25 | 9.9 |
| D | Acrylique | 2000 | 30 | 25 | 18.1 |
| E | Acrylique | 2000 | 40 | 25 | 16.0 |
| F | Acrylique | 2000 | 50 | 25 | 26.1 |
| G | Acrylique | 2000 | 50 | 30 | 44.0 |
| H | Acrylique/ Maléique 50/50 | 2000 | 0 | 25 | 50.0 |
| I | Acrylique/ Maléique 50/50 | 2000 | 10 | 25 | 70.0 |
| J | Méthacrylique | 2000 | 10 | 25 | 3.5 |
| K | Acrylique | 2000 | 50 | 30 | 55.5 |

Les résultats des exemples A à F mettent en évidence un ralentissement de la cinétique lorsque la teneur en OP augmente dans le polyéther. De ce fait, une teneur importante en polyéther non converti reste dans le polymère, ce qui diminue la valeur économique du procédé.

Les chromatographies par perméation de gel montrent par ailleurs une augmentation de la polydispersité lorsque la teneur en oxyde de propylène augmente.

### EXEMPLE 1

On a préparé d'abord la solution de catalyseur par neutralisation d'acide p-toluène sulfonique en solution aqueuse, dont le pH est amené à un pH compris entre 7 et 10 à l'aide de soude (à 50%, puis 1 N et enfin 0.1 N).

Dans un quadricol muni d'un agitateur et de moyens de chauffage et relié à une trompe d'eau, on a introduit 25g d'acide polyacrylique (Mw= 2000, titre acide mesuré =330 mg KOH/g, extrait sec 49% en poids) puis 0,86g (28,7 g d'une solution à 3% en poids, 3% molaire des fonctions carboxyliques de l'acide polyacrylique) de p-toluènesulfonate de sodium.

Dans le milieu ont été ensuite introduit 73,66g (25% molaire des fonctions carboxyliques de l'acide polyacrylique) de polyoxyde d'éthylène / polyoxyde de propylène de masse molaire Mw 2000 contenant 50% molaires d'oxyde de propylène répartis statistiquement le long de la chaîne, laquelle est terminée par un groupement méthoxy.

Le mélange réactionnel a été porté à une température de 80 °C et mis progressivement sous vide (pression d'environ 50 mbar). A la fin de la distillation de l'eau, la température du milieu réactionnel a été portée progressivement à 175°C. Le temps de réaction a été mesuré à partir du moment où le milieu réactionnel atteint 170°C. La réaction a été poursuivie pendant une durée de 8h30.

L'avancement de la réaction d'estérification est suivi par le dosage de MPEG (polyéther méthoxy terminé) non réagi, par GPC, par comparaison de l'aire du pic avec une courbe d'étalonnage établie préalablement.

A l'issue de la réaction, le milieu réactionnel est ramené à pression atmosphérique et la chauffe est coupée. Une fois la température du milieu réactionnel inférieure à 90°C, le polymère fondu est dilué à 50% en poids dans l'eau.

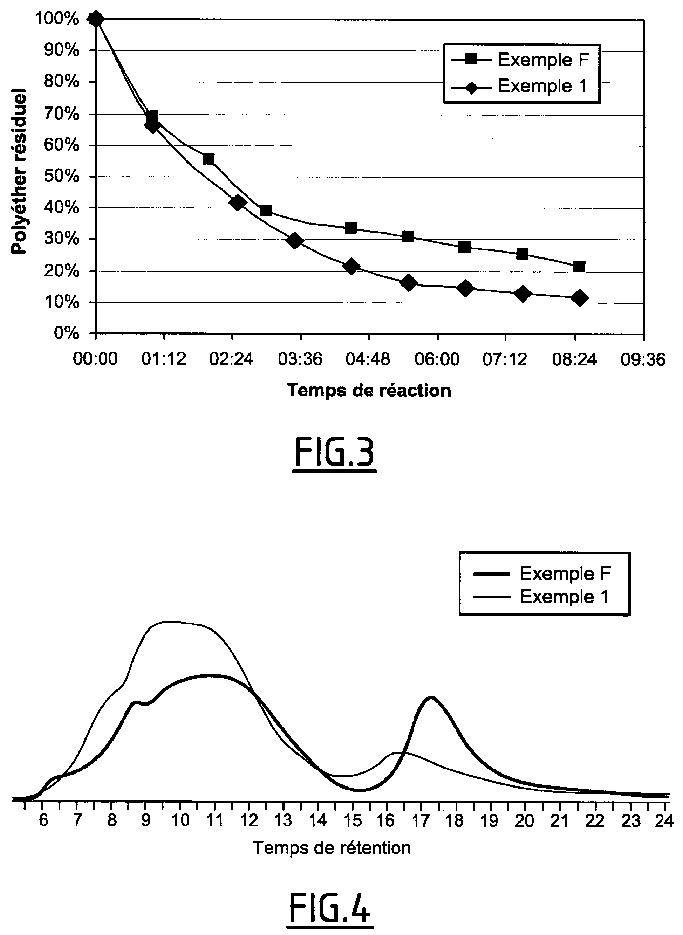

La teneur en polyéther résiduelle est indiquée dans le tableau 2 ci-dessous et dans la figure 3. On constate un meilleur avancement du taux de conversion du polyéther avec le p-toluènesulfonate de sodium comparé à l'hydroxyde de lithium.

La chromatographie par perméation de gel du copolymère obtenu, comparé à celui préparé selon l'exemple F (figure 4), fait apparaître un rétrécissement de l'épaulement situé autour de 10 minutes de rétention, ce qui indique une diminution de la proportion de composés de haute masse pour le copolymère préparé selon l'exemple 1. La comparaison du deuxième pic situé à 17 minutes de rétention environ indique une augmentation de la conversion du polyéther dans le procédé selon l'exemple 1.

**Tableau 2 : Exemples selon l'invention**

| **Exemple** | **Acide polycarboxylique** | **Polyéther** | | **Taux d'ester visé** % molaire] | **Polyéther résiduel** % en poids] |
|---|---|---|---|---|---|
| | | **Masse molaire** | **Oxyprop.** % molaire] | | |
| 1 | Acrylique | 2000 | 50 | 25 | 11.5 |
| 2 | Acrylique | 2000 | 10 | 25 | 2.2 |
| 3 | Acrylique | 2000 | 10* | 25 | 8.5 |
| 4 | Acrylique | 2000 | 50 | 30 | 8.4 |
| 5 | Acrylique | 2000 | 50 | 35 | 15.4 |
| 6 | Acrylique | 2000/350 | 50/0 | 35 | 10.1 |
| 7 | Acrylique | 2000/350 | 50/0 | 45 | 10.9 |
| 8 | Acrylique | 2000/350 | 50/0 | 55 | 13.6 |
| 9 | Acrylique / Maléique 50/50 | 2000 | 0 | 25 | 15.0 |
| 10 | Acrylique / Maléique 50/50 | 2000 | 10 | 25 | 22.0 |
| 11 | Acrylique / Maléique 80/20 | 2000 | 0 | 25 | 2.3 |
| 12 | Acrylique / Maléique 80/20 | 2000 | 10 | 25 | 6.0 |
| 13 | Méthacrylique | 2000 | 10 | 25 | 5.4 |

| | | | | | |
|---|---|---|---|---|---|
| * en moyenne, le polyéther comporte des chaînes avec 50% et 0% OP | | | | | |

### EXEMPLE 2

L'exemple 1 a été répété mais en remplaçant le MPEG par un MPEG de masse molaire 2000 avec 10% molaires d'unités oxypropylène. La réaction est arrêtée au bout de 6h.

La teneur en polyéther résiduel mesurée est portée dans le tableau 2 ci-dessus. On constate un meilleur taux de conversion du polyéther avec le p-toluènesulfonate de sodium à titre de catalyseur comparé à l'exemple B.

### EXEMPLE 3

L'exemple 2 a été répété dans les mêmes conditions opératoires mais en remplaçant le MPEG de masse molaire 2000 avec 10% molaires d'unités oxypropylène par un MPEG mixte OP/OE de même masse molaire comportant une chaîne avec un ratio molaire OP/(OE + OP) de 50% et une chaîne 100% d'unités oxyéthylène. Etant donné la proportion entre les 2 chaînes, le MPEG comporte en moyenne 10% molaire d'unités oxypropylène par chaîne. La réaction est arrêtée au bout de 6 heures.

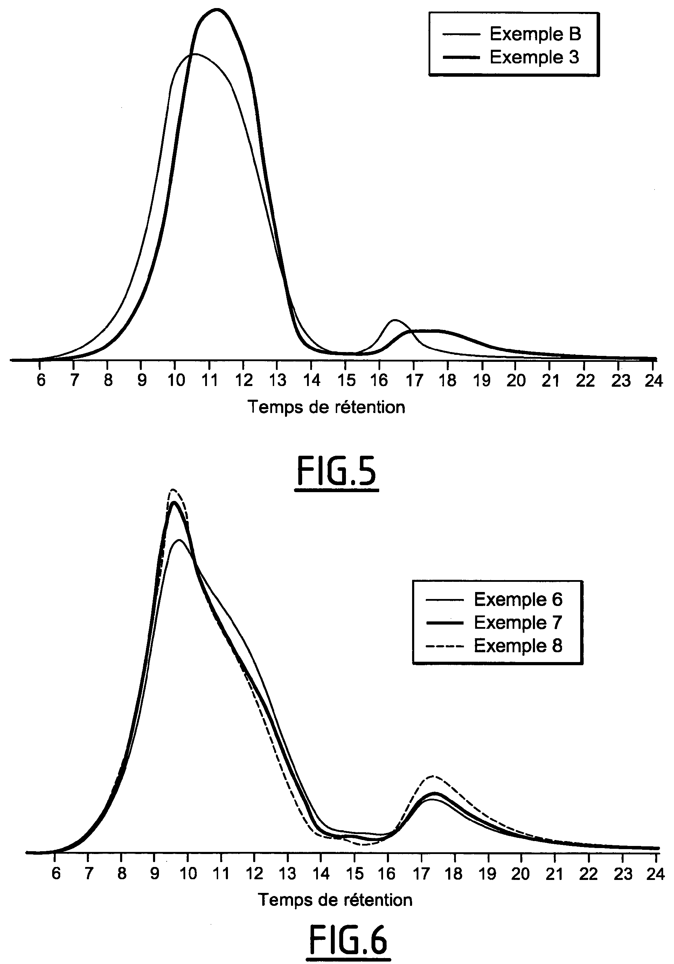

La teneur en polyéther résiduel mesuré est portée dans le tableau 2 ci-dessus. La chromatographie par perméation de gel du copolymère obtenu, comparé à celui préparé selon l'exemple B (figure 5) fait apparaître un taux de conversion de polyéther équivalent et un avantage du copolymère préparé selon l'exemple 3 en termes de monodispersité.

### EXEMPLE 4

L'exemple 1 a été répété dans les mêmes conditions opératoires mais en remplaçant le MPEG cette fois par un MPEG mixte OP/OE de même masse molaire comportant une chaîne avec un ratio molaire OP/(OE + OP) de 50% et en visant un taux d'ester de 30% au lieu de 25%.

Par conséquent, on a ajouté 88,39 g (30% molaire des fonctions carboxyliques de l'acide polyacrylique) de polyoxyde d'éthylène/polyoxyde de propylène de masse molaire Mw 2000 contenant 50% molaire d'oxyde de propylène répartis statistiquement le long de la chaîne, laquelle est terminée par un groupement méthoxy.

La réaction est arrêtée au bout de 12 h.

La teneur en polyéther résiduel mesurée est portée dans le tableau 2 ci-dessus.

### EXEMPLE G (exemple de comparaison)

L'exemple 4 est répété dans les mêmes conditions opératoires, mais en utilisant cette fois non pas le p-toluènesulfonate de sodium comme catalyseur, mais 0,76g (3% molaire des fonctions carboxyliques de l'acide polyacrylique) d'acide p-toluènesulfonique.

La réaction est arrêtée au bout de 8h. La teneur résiduelle en polyéther est portée dans le tableau 1.

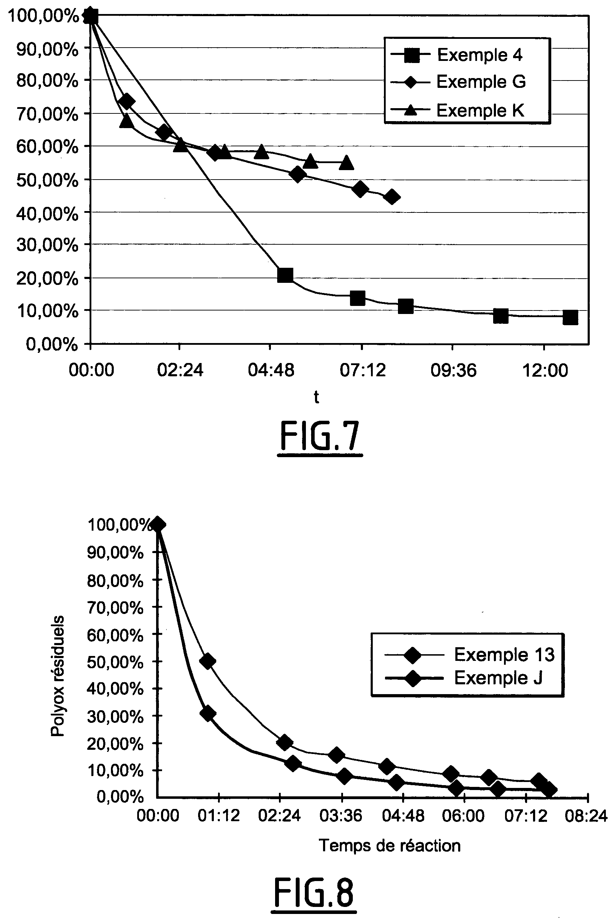

Le suivi de la teneur en polyéther résiduelle montre que l'utilisation de l'acide p-toluènesulfonique ralentit la cinétique considérablement comparé au sel correspondant (figure 7).

### EXEMPLE 5

L'exemple 4 est encore une fois répété mais en ajoutant maintenant le polyéther 103,13g (35% molaire des fonctions carboxyliques de l'acide polyacrylique) de polyoxyde d'éthylène/polyoxyde de propylène de masse molaire Mw 2000 contenant 50% molaires d'oxyde de propylène répartis statistiquement le long de la chaîne, laquelle est terminée par un groupement méthoxy.

La réaction est arrêtée au bout de 15 heures.

Les faibles teneurs en polyéther résiduel des résultats montrent qu'il est possible de monter les taux d'ester à des valeurs supérieures à 25% avec une meilleure conversion du MPEG mixte POE/POP 2000 en mettant en oeuvre le p-toluènesulfonate de sodium.

### EXEMPLE 6

L'exemple 1 est répété dans les mêmes conditions opératoires mais en ajoutant en plus du polyoxyde d'éthylène/polyoxyde de propylène de masse molaire Mw 2000 contenant 50% molaires d'oxyde de propylène 5,16g (10% molaire des fonctions carboxyliques de l'acide polyacrylique) de polyoxyde d'éthylène de masse molaire Mw 350 méthoxy terminé.

Le taux d'ester théorique passe donc à 35% pour un taux d'ester fixe en MPEG mixte POE/POP 2000 de 25%.

La réaction est arrêtée au bout de 15 h.

### EXEMPLE 7

L'exemple 1 est répété dans les mêmes conditions opératoires mais en ajoutant en plus du polyoxyde d'éthylène/polyoxyde de propylène de masse molaire Mw 2000 contenant 50% molaires d'oxyde de propylène 10,31g (20% molaire des fonctions carboxyliques de l'acide polyacrylique) de polyoxyde d'éthylène de masse molaire Mw 350 méthoxy terminé.

Le taux d'ester théorique passe donc à 45% pour un taux d'ester fixe en MPEG mixte POE/POP 2000 de 25%.

La réaction est arrêtée au bout de 17 h.

### EXEMPLE 8

L'exemple 1 est répété dans les mêmes conditions opératoires mais en ajoutant en plus du polyoxyde d'éthylène/polyoxyde de propylène de masse molaire Mw 2000 contenant 50% molaires d'oxyde de propylène 15,47g (30% molaire des fonctions carboxyliques de l'acide polyacrylique) de polyoxyde d'éthylène de masse molaire Mw 350 méthoxy terminé.

Le taux d'ester théorique passe donc à 55% pour un taux d'ester fixe en MPEG mixte POE/POP 2000 de 25%.

La réaction est arrêtée au bout de 18 h.

### EXEMPLE 9

Dans un quadricol muni d'un agitateur et de moyens de chauffage et relié à une trompe d'eau, on a introduit 25g de copolymère d'acide acrylique et d'anhydride maléique en rapport molaire 50 :50 (Mw= 3900, titre acide calculé = 380.8 mg KOH/g, extrait sec 39.65% en poids) puis 0,89 g (33,0 g d'une solution à 3% en poids, 3% molaire des fonctions carboxyliques du copolymère) de p-toluènesulfonate de sodium.

Dans le milieu ont été ensuite introduit 85,0 g (25% molaire des fonctions carboxyliques de l'acide polyacrylique) de polyoxyde d'éthylène méthoxylé (MPEG2000).Le mélange réactionnel a été porté à une température de 80°C et mis progressivement sous vide (pression d'environ 50 mbar). A la fin de la distillation de l'eau, la température du milieu réactionnel a été portée progressivement à 175°C. Le temps de réaction a été mesuré à partir du moment où le milieu réactionnel atteint 170°C.

La réaction a été poursuivie pendant une durée de 8h. Pendant la réaction, le milieu réactionnel est resté homogène.

A l'issue de la réaction, le milieu réactionnel est ramené à pression atmosphérique et la chauffe est coupée. Une fois la température du milieu réactionnel inférieure à 90°C, le polymère fondu est dilué à 50% en poids dans l'eau.

La teneur en polyéther résiduelle est indiquée dans le tableau 2.

### EXEMPLE H (exemple de comparaison)

L'exemple 9 est répété mais en remplaçant le catalyseur par 0,39 g (5,5% molaire des fonctions carboxyliques de l'acide polyacrylique) d'hydroxyde de lithium.

La réaction a été poursuivie pendant une durée de 8h. Pendant la réaction, le milieu réactionnel est resté hétérogène.

A l'issue de la réaction, le milieu réactionnel est ramené à pression atmosphérique et la chauffe est coupée. Une fois la température du milieu réactionnel inférieure à 90°C, le polymère fondu est dilué à 50% en poids dans l'eau.

La teneur en polyéther résiduelle est indiquée dans le tableau 1.

### EXEMPLE 10

L'exemple 9 est répété, mais en utilisant comme polyéther 73,66g (25% molaire des fonctions carboxyliques du copolymère) de polyoxyde d'éthylène / polyoxyde de propylène de masse molaire Mw 2000 contenant 10% molaires d'oxyde de propylène répartis statistiquement le long de la chaîne, laquelle est terminée par un groupement méthoxy.

La réaction a été poursuivie pendant une durée de 8h. Pendant la réaction, le milieu réactionnel est resté homogène.

A l'issue de la réaction, le milieu réactionnel est ramené à pression atmosphérique et la chauffe est coupée. Une fois la température du milieu réactionnel inférieure à 90°C, le polymère fondu est dilué à 50% en poids dans l'eau.

La teneur en polyéther résiduelle est indiquée dans le tableau 2.

### EXEMPLE I (exemple de comparaison)

L'exemple 10 est répété mais en remplaçant le catalyseur par 0,39 g (5,5% molaire des fonctions carboxyliques de l'acide polyacrylique) d'hydroxyde de lithium.

La réaction a été poursuivie pendant une durée de 8h. Pendant la réaction, le milieu réactionnel est resté hétérogène.

A l'issue de la réaction, le milieu réactionnel est ramené à pression atmosphérique et la chauffe est coupée. Une fois la température du milieu réactionnel inférieure à 90°C, le polymère fondu est dilué à 50% en poids dans l'eau.

La teneur en polyéther résiduelle est indiquée dans le tableau 1.

### EXEMPLE 11

L'exemple 9 est répété mais en utilisant à titre d'acide polycarboxylique un copolymère d'acide acrylique et d'anhydride maléique en rapport molaire 80 :20 (Mw= 2300, titre acide calculé = 342,5 mg KOH/g, extrait sec 40,26% en poids)

La quantité de catalyseur utilisée est de 0,89 g (29,67 g d'une solution à 3% en poids, 3% molaire des fonctions carboxyliques du copolymère) de p-toluènesulfonate de sodium.

La quantité de polyether sans OP de masse molaire Mw 2000 méthoxy terminé est de 74,46 g (25% molaire des fonctions carboxyliques du copolymère)

La réaction a été poursuivie pendant une durée de 8h. Pendant la réaction, le milieu réactionnel est resté homogène.

A l'issue de la réaction, le milieu réactionnel est ramené à pression atmosphérique et la chauffe est coupée. Une fois la température du milieu réactionnel inférieure à 90°C, le polymère fondu est dilué à 50% en poids dans l'eau.

La teneur en polyéther résiduelle est indiquée dans le tableau 2.

### EXEMPLE 12

L'exemple 10 est répété mais en utilisant à titre de acide polycarboxylique un copolymère d'acide acrylique et d'anhydride maléique en rapport molaire 80 :20 (de masse molaire Mw= 2300, titre acide calculé = 342,5 mg KOH/g, extrait sec 40.26% en poids).

La quantité de catalyseur utilisée est de 0,89 g (29,67 g d'une solution à 3% en poids, 3% molaire des fonctions carboxyliques du copolymère) de p-toluènesulfonate de sodium.

La quantité de polyéther de masse molaire Mw 2000 polyoxyde d'éthylène / polyoxyde de propylène de masse molaire Mw 2000 contenant 10% molaires d'oxyde de propylène répartis statistiquement le long de la chaîne méthoxy terminée est de 74,46 g (25% molaire des fonctions carboxyliques du copolymère)

La réaction a été poursuivie pendant une durée de 8h. Pendant la réaction, le milieu réactionnel est resté homogène.

A l'issue de la réaction, le milieu réactionnel est ramené à pression atmosphérique et la chauffe est coupée. Une fois la température du milieu réactionnel inférieure à 90°C, le polymère fondu est dilué à 50% en poids dans l'eau.

La teneur en polyéther résiduelle est indiquée dans le tableau 2.

### EXEMPLE 13

L'exemple 2 est répété mais en utilisant à titre d'acide polycarboxylique un acide polyméthacrylique (Mw= 4000, titre acide mesuré =184.8 mg KOH/g, extrait sec 30.4% en poids).

La quantité de catalyseur utilisée est de 0,48 g (16,0 g d'une solution à 3% en poids, 3% molaire des fonctions carboxyliques du copolymère) de p-toluènesulfonate de sodium.

La quantité de polyether de masse molaire Mw 2000 polyoxyde d'éthylène / polyoxyde de propylène de masse molaire Mw 2000 contenant 10% molaires d'oxyde de propylène répartis statistiquement le long de la chaîne méthoxy terminée est de 41,26 g (25% molaire des fonctions carboxyliques du copolymère)

La réaction a été poursuivie pendant une durée de 7h30. Pendant la réaction, le milieu réactionnel est resté homogène.

A l'issue de la réaction, le milieu réactionnel est ramené à pression atmosphérique et la chauffe est coupée. Une fois la température du milieu réactionnel inférieure à 90°C, le polymère fondu est dilué à 50% en poids dans l'eau.

La teneur en polyéther résiduelle est indiquée dans le tableau 2.

### EXEMPLE J (exemple de comparaison)

L'exemple 13 est répété dans les mêmes conditions opératoires, mais en remplaçant le catalyseur par 0,08 g de NaOH (2,5% molaire des fonctions carboxyliques de l'acide polyacrylique).

La réaction a été poursuivie pendant une durée de 7h40. Pendant la réaction, le milieu réactionnel est resté homogène.

A l'issue de la réaction, le milieu réactionnel est ramené à pression atmosphérique et la chauffe est coupée. Une fois la température du milieu réactionnel inférieure à 90°C, le polymère fondu est dilué à 50% en poids dans l'eau.

La teneur en polyéther résiduelle est indiquée dans le tableau 1.

### EXEMPLE K (exemple de comparaison)

L'exemple 4 est répété dans les mêmes conditions opératoires, mais en remplaçant le catalyseur par 1,61 g de triflate de zinc (3% molaire des fonctions carboxyliques de l'acide polyacrylique).

La réaction a été poursuivie pendant une durée de 6h50. Pendant la réaction, le milieu réactionnel semble homogène mais décante en cas d'arrêt de l'agitation.

A l'issue de la réaction, le milieu réactionnel est ramené à pression atmosphérique et la chauffe est coupée. Une fois la température du milieu réactionnel inférieure à 90°C, le polymère fondu est dilué à 50% en poids dans l'eau.

La teneur en polyéther résiduelle est indiquée dans le tableau 1.

Le suivi de la teneur résiduelle en polyéther (figure 7) montre que l'utilisation du triflate de zinc conduit à une cinétique considérablement plus lente comparée aux catalyseurs utilisés dans le procédé revendiqué comme le sel de sodium de l'acide p-toluènesulfonique.

Les résultats des exemples ci-dessus démontrent qu'il est possible de préparer avec le procédé selon l'invention des copolymères présentant des taux d'ester supérieurs à 25% avec une bonne conversion.

Les chromatographies par GPC des copolymères préparés selon les exemples 6, 7 et 8 (figure 6) montrent que la polydispersité des polymères est conservée même lorsque le taux d'ester augmente, entraînant un rallongement du temps de synthèse.

Le procédé selon l'invention permet donc d'assurer l'estérification d'acides polycarboxyliques avec des polyalkoxydes avec des bons taux de conversion, même lorsque les polyalkoxydes comportent des taux élevés d'oxyde de propylène pour un temps de réaction est équivalent ou inférieur.

Par ailleurs, on constate que les copolymères préparés avec le procédé selon l'invention présentent une meilleure polydispersité, ainsi qu'une plus faible teneur en produits à masse très élevée.

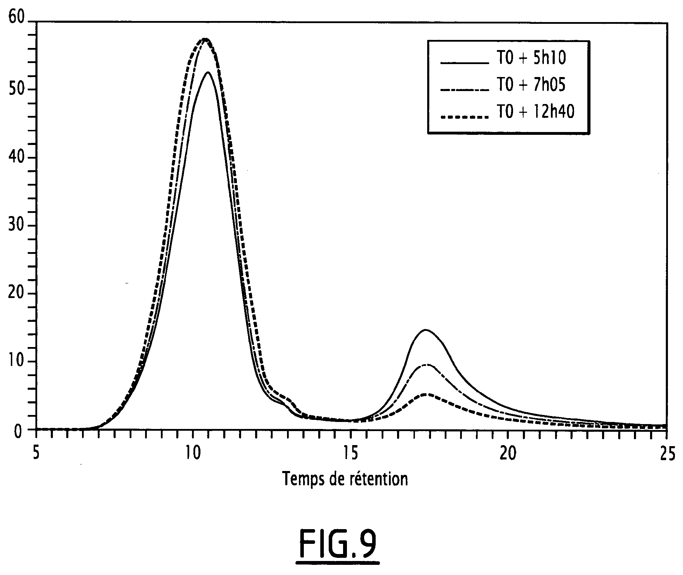

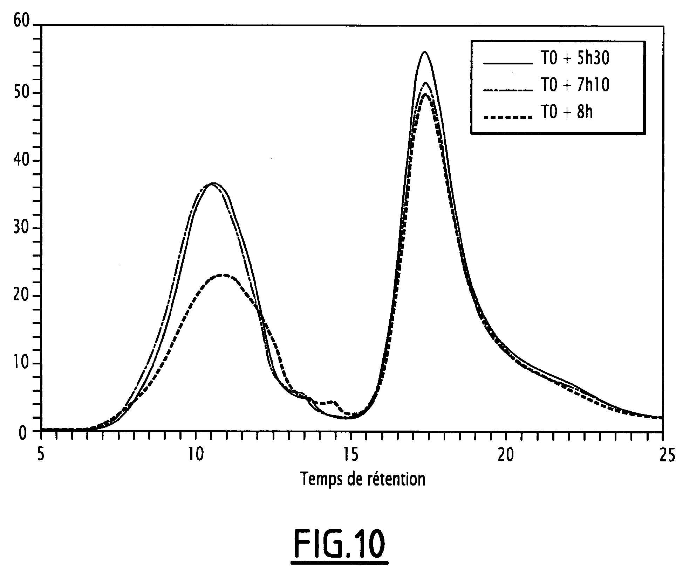

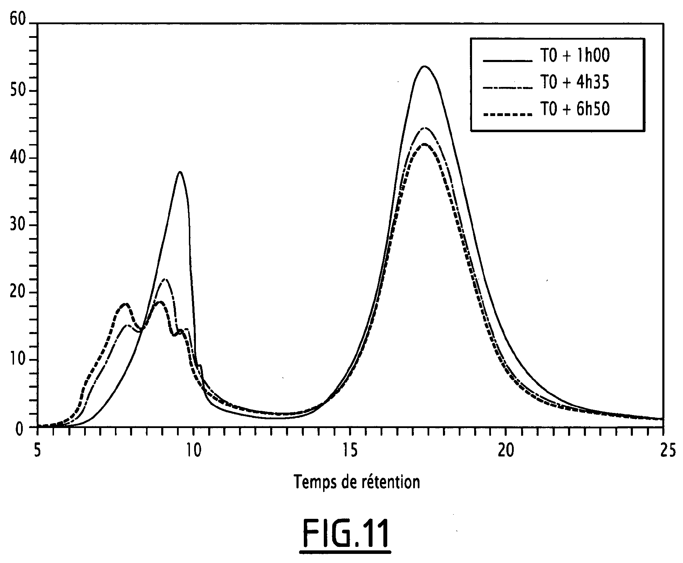

Sur les figures 9, 10 et 11, le polymère formé est élué sur la plage de temps de rétention comprise entre 5 et 14 min. Les pics visibles entre 14 et 25 min sont ceux du polyéther non greffé. Sur la figure 9, qui correspond au suivi du procédé selon l'invention, la distribution de masse du polymère formé reste étroite tout au long de la réaction. On peut en conclure qu'il y a peu de dégradation des chaînes de polyéther dans les conditions de l'invention. En revanche, pour les procédés conduits avec des catalyseurs différents (voir figures 10 et 11), la distribution de masse du polymère formé s'élargit au cours de la synthèse et l'on voit même l'apparition d'épaulements multiples dans le cas de la figure 11 (catalyse au triflate de zinc). On peut conclure qu'il y a une dégradation notable du polyéther pour les procédés conduits avec des catalyseurs différents de ceux de l'invention.

En outre, il a été observé que le procédé selon l'invention permet l'estérification d'acides polycarboxyliques difficilement transformés avec le procédé conventionnel, comme les copolymères d'acide acrylique avec de l'anhydride maléique.

## Revendications

1. Procédé de préparation de polycarboxylates polyalkoxylés dans lequel l'on fait réagir, en présence d'eau et d'un catalyseur, à une température comprise entre 120 et 250 °C :
- au moins un acide polycarboxylique obtenu par polymérisation d'au moins un acide carboxylique insaturé; et
- au moins un polyéther portant un groupe hydroxyle libre capable de réagir avec une fonction carboxylique dudit acide polycarboxylique,
ledit procédé étant **caractérisé en ce que** le catalyseur est un sel alcalin ou alcalin-terreux d'un acide protique fort.

2. Procédé selon la revendication 1, dans lequel le catalyseur est choisi dans le groupe constitué par les sels d'acides alkyl-, alkylaryl, aryl, ou arylalkylsulfoniques, les acides alkyl-, alkylaryl-, aryl-, ou arylalkylphosphoriques , les acides alkyl-, alkylaryl-, aryl-, ou arylalkylphosphoniques et les alkyl-, alkylaryl-, aryl-, ou arylalkylsulfates acides, lesdits acides pouvant être substitués par halogène ou par des groupements oxyalkylène, notamment alkyl-polyoxyalkylène, alkylaryl polyoxyalkylène et aryl polyoxyalkylène..

3. Procédé selon la revendication 2, dans lequel le catalyseur est choisi parmi les sels d'acides alkylsulfoniques, arylsulfoniques, alkylarylsulfoniques ou arylalkylsulfoniques.

4. Procédé selon la revendication 3, dans lequel le catalyseur est un sel d'acide p-toluènesulfonique.

5. Procédé selon la revendication 4, dans lequel le catalyseur est choisi parmi les sels de sodium, potassium, lithium, calcium et magnésium de l'acide p-toluènesulfonique.

6. Procédé selon l'une des revendications 1 à 5, dans lequel on ajoute le catalyseur en une quantité de 0,04% à 10% molaire, rapporté au nombre de fonctions carboxyliques de l'acide polycarboxylique.

7. Procédé selon l'une des revendications 1 à 6, dans lequel l'acide polycarboxylique est choisi parmi les homopolymères et copolymères d'acide (méth)acrylique et les copolymères d'acide (méth)acrylique et d'acide maléique ou d'anhydride maléique.

8. Procédé selon l'une des revendications 1 à 7, dans lequel le polyéther est un alkyléther de polyalkylène glycol de formule :
HO-O-R³
dans laquelle :
R³ est H ou un groupe alkyle, aryle, alkylaryle, arylalkyle de 1 à 20 atomes de carbone, et Q est de formule (II): 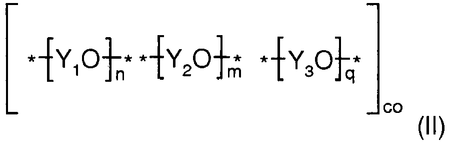 dans laquelle :
- Y₁ représente un groupe alkylène de 2 atomes de carbone,
- Y₂ représente un groupe alkylène de 3 atomes de carbone ;
- Y₃ représente un groupe alkylène de 4 atomes de carbone ;
- n est un nombre entier variant de 3 à 500 ;
- m est un nombre entier variant de 0 à 150 ; et
- q est un nombre entier variant de 0 à 150.

9. Procédé selon la revendication 8, dans lequel le polyéther est de formule HO-Q-R³ dans laquelle R³ est un groupe méthyle ou éthyle.

10. Procédé selon l'une des revendications 1 à 9, dans lequel le polyéther est de formule HO-Q-R³ dans laquelle Q est de formule (II) précitée, où :
- n est un nombre entier variant de 5 à 50 ;
- m est un nombre entier variant de 1 à 25 ; et
- q est 0.

11. Procédé selon l'une des revendications 8 à 10, dans lequel le polyéther est de formule HO-Q-R³ dans laquelle Q est de formule (II) précitée, où le rapport moyen (n/n+m+q) est compris entre 0,2 et 1.

12. Procédé selon l'une des revendications 1 à 11, dans lequel on ajoute 5 à 80% molaire de polyéther, rapporté au nombre de fonctions carboxyliques disponibles de l'acide polycarboxylique.

## Patentansprüche

1. Verfahren zur Herstellung von polyalkoxylierten Polycarboxylaten, wobei, in Anwesenheit von Wasser und einem Katalysator, bei einer Temperatur zwischen 120 und 250 °C:
- mindestens eine Polycarbonsäure, erhalten durch Polymerisation mindestens einer ungesättigten Polycarbonsäure; und
- mindestens ein Polyether mit einer freien Hydroxylgruppe, die mit einer Carbonsäurefunktion der Polycarbonsäure zu reagieren in der Lage ist, reagieren gelassen wird,
wobei das Verfahren **dadurch gekennzeichnet ist, dass** der Katalysator ein Alkali- oder Erdalkalisalz einer starken protischen Säure ist.

2. Verfahren gemäß Anspruch 1, wobei der Katalysator ausgewählt ist aus der Gruppe bestehend aus den Salzen von Alkyl-, Alkylaryl-, Aryl- oder Arylalkyl-Sulfonsäuren, Alkyl-, Alkylaryl-, Aryl- oder Arylalkyl-Phosphorsäuren, Alkyl-, Alkylaryl, Aryl- oder Arylalkyl-Phosphonsäuren und Alkyl-, Alkylaryl-, Aryl- oder Arylalkyl-Säuresulfaten, wobei die Säuren mit Halogen oder mit Oxyalkylen-Gruppen substituiert sein können, insbesondere Alkyl-Polyoxyalkylen, Alkylaryl-Polyoxyalkylen und Aryl-Polyoxyalkylen.

3. Verfahren gemäß Anspruch 2, wobei der Katalysator ausgewählt ist aus den Salzen von Alkylsulfon-, Arylsulfon-, Alkylarylsulfon- oder Arylalkylsulfonsäuren.

4. Verfahren gemäß Anspruch 3, wobei der Katalysator ein Salz von p-Toluolsulfonsäure ist.

5. Verfahren gemäß Anspruch 4, wobei der Katalysator ausgewählt ist aus den Natrium-, Kalium-, Lithium-, Calcium- und Magnesiumsalzen der p-Toluolsulfonsäure.

6. Verfahren gemäß einem der Ansprüche 1 bis 5, wobei der Katalysator in einer Menge von 0,04 Mol-% bis 10 Mol-% hinzugefügt wird, bezogen auf die Anzahl der Carbonsäurefunktionen der Polycarbonsäure.

7. Verfahren gemäß einem der Ansprüche 1 bis 6, wobei die Polycarbonsäure ausgewählt ist aus den Homopolymeren und Copolymeren von (Meth)Acrylsäure und den Copolymeren von (Meth)Acrylsäure und Maleinsäure oder Maleinsäureanhydrid.

8. Verfahren gemäß einem der Ansprüche 1 bis 7, wobei der Polyether ein Alkylether von Polyalkylenglycol der Formel:
HO-Q-R³
ist, wobei:
R³ H oder eine Alkyl-, Aryl-, Alkylaryl-, Arylalkyl-Gruppe mit 1 bis 20 Kohlenstoffatomen ist und Q die Formel (II) hat: 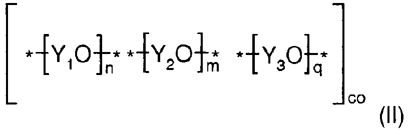 wobei:
- Y₁ eine Alkylengruppe mit 2 Kohlenstoffatomen darstellt,
- Y₂ eine Alkylengruppe mit 3 Kohlenstoffatomen darstellt;
- Y₃ eine Alkylengruppe mit 4 Kohlenstoffatomen darstellt;
- n eine ganze Zahl von 3 bis 500 ist;
- m eine ganze Zahl von 0 bis 150 ist; und
- q eine ganze Zahl von 0 bis 150 ist.

9. Verfahren gemäß Anspruch 8, wobei der Polyether die Formel HO-Q-R³ hat, wobei R³ eine Methyl- oder Ethylgruppe ist.

10. Verfahren gemäß einem der Ansprüche 1 bis 9, wobei der Polyether die Formel HO-Q-R³ hat, wobei Q die oben genannte Formel (II) ist, oder:
- n ist eine ganze Zahl von 5 bis 50;
- m ist eine ganze Zahl von 1 bis 25; und
- q ist 0.

11. Verfahren gemäß einem der Ansprüche 8 bis 10, wobei der Polyether die Formel HO-Q-R³ hat, wobei Q die oben genannte Formel (II) ist, oder das durchschnittliche Verhältnis (n/n+m+q) zwischen 0,2 und 1 ist.

12. Verfahren gemäß einem der Ansprüche 1 bis 11, wobei 5 bis 80 Mol-% Polyether, bezogen auf die Anzahl an verfügbaren Carbonsäurefunktionen der Polycarbonsäure, zugefügt werden.

## Claims

1. Method for preparing polyalkoxylated polycarboxylates wherein the following are caused to react in the presence of water and a catalyst at a temperature of between 120 and 250°C:
- at least one polycarboxylic acid obtained by polymerization of at least one unsaturated carboxylic acid; and
- at least one polyether carrying a free hydroxyl group capable of reacting with a carboxylic function of the said polycarboxylic acid,
the said method being **characterized in that** the catalyst is an alkaline or alkaline-earth salt of a strong protic acid.

2. The method according to claim 1, wherein the catalyst is chosen from the group comprising the salts of alkyl-, alkylaryl, aryl, or arylalkylsulfonic acids, alkyl-, alkylaryl-, aryl- or arylalkylphosphoric acids, alkyl-, alkylaryl-, aryl- or arylalkylphosphonic acids, and acid alkyl-, alkylaryl-, aryl- or arylalkylsulfates, the said acids possibly being substituted by halogen or by oxyalkylene groups, in particular alkyl-polyoxyalkylene, alkylaryl polyoxyalkylene and aryl polyoxyalkylene.

3. The method according to claim 2, wherein the catalyst is chosen from among the salts of alkylsulfonic, arylsulfonic, alkylarylsulfonic or arylalkylsulfonic acids.

4. The method according to claim 3, wherein the catalyst is a salt of p-toluenesulfonic acid.

5. The method according to claim 4, wherein the catalyst is chosen from among the sodium, potassium, lithium, calcium and magnesium salts of p-toluenesulfonic acid.

6. The method according to one of claims 1 to 5, wherein the catalyst is added in a quantity of 0.04% to 10 mole % relative to the number of carboxylic functions of the polycarboxylic acid.

7. The method according to one of claims 1 to 6, wherein the polycarboxylic acid is chosen from among the homopolymers and copolymers of (meth)acrylic acid and the copolymers of (meth)acrylic acid and maleic acid or maleic anhydride.

8. The method according to one of claims 1 to 7, wherein the polyether is an alkylether of polyalkylene glycol of formula:
HO-Q-R³
where:
R³ is H or an alkyl, aryl, alkylaryl, arylalkyl group with 1 to 20 carbon atoms, and Q is of formula (II): 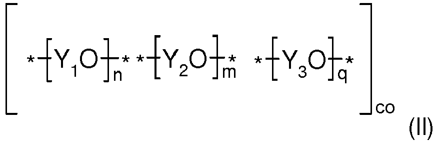 where:
- Y₁ is an alkylene group with 2 carbon atoms;
- Y₂ is an alkylene group with 3 carbon atoms;
- Y₃ is an alkylene group with 4 carbon atoms;
- n is an integer varying from 3 to 500;
- m is an integer varying from 0 to150; and
- q is an integer varying from 0 to 150.

9. The method according to claim 8, wherein the polyether is of formula HO-Q-R³ in which R³ is a methyl or ethyl group.

10. The method according to one of claims 1 to 9, wherein the polyether is of formula HO-Q-R³ in which Q is of above-mentioned formula (II), in which:
- n is an integer varying from 5 to 50;
- m is an integer varying from 1 to 25; and
- q is 0.

11. The method according to one of claims 8 to 10, wherein the polyether is of formula HO-Q-R³ in where Q is of the above-mentioned formula (II), in which the mean ratio (n/n+m+q) is between 0.2 and 1.

12. The method according to one of claims 1 to 11, wherein 5 to 80 mole % of polyether are added relative to the number of available carboxylic functions of the polycarboxylic acid.
